# EUROPEAN PATENT APPLICATION

(11) **EP 2 495 025 A1**
(43) Date of publication of application: **05.09.2012**
(21) Application number: 11156990.1
(22) Date of filing: 04.03.2011
(51) Int. Cl.: B01D 39/16, B01D 39/20

(54) **Filter for the removal of micro-vesicles from biological fluids, methods and devices using such a filter**

(71) Applicant: Fresenius Medical Care Deutschland GmbH, 61352 Bad Homburg (DE)
(72) Inventor: Mari, Giorgio, 41037 Mirandola (Modena) (IT); Tetta, Ciro, 41037 Mirandola (Modena) (IT); Camussi, Giovanni, 10132 Torino (IT); Cantaluppi, Vincenzo, 22038 Tavernerio (Como) (IT)
(74) Representative: Rambelli, Paolo

(57) **Abstract**

A filter for the removal of micro-vesicles from biological fluids comprising one or more layers of a non-woven fibrous web, wherein the fibrous web is based on a polymeric substrate having a surface coating for contact with the biological fluid made from alkoxy(meth)acrylates or copolymers thereof; the polymeric substrate is preferably made from polybutylenterephthalate or a polyamide; the filter is capable of removing microvesicles by adsorption and is used in method and devices for the removal from plasma or blood particularly of tumor associated or sepsis associated microvesicles.

## Description

The present invention relates to the field of filters and filter devices for the removal of micro-vesicular particles from fluids and to methods of use of such filter and filter devices.

Micro-vesicles (MV) are circular membrane fragments derived from different types of activating cells, able to play a key-role in cell-to-cell communication through the transfer of proteins and RNAs.

Micro-vesicles secreted by tumour cells have been known since the early 1980s; they were estimated to be between 50 and 200 nm in diameter and they are known to be associated with a variety of immune inhibitory effects. The recent recognition that tumour secreted exosomes are identical to the tumour secreted micro-vesicles described in the 1980s has stimulated a wide variety of research into the immune suppressive ability of said micro-vesicles. In view of the recently discovered properties of micro-vesicles in general and of tumour associated micro-vesicles (exosomes specifically) there is a need for developing efficient methods for the removal of such micro-vesicles from biological fluids as a therapeutical treatment and/or to obtain micro-vesicle preparations for administration to patients.

Exosomes can be separated from blood components, such as plasma and from cell-calceous supernatants by ultracentrifugation.

WO2007/103572 describes methods of removing micro-vesicular particles, including specifically tumour-associated exosomes, from the systemic circulation of a subject with the goal of reversing antigen-specific and antigen-nonspecific immune suppression. The removal of said micro-vesicular particles is carried out in an extracorporeal circulation device including a hollow fibre filter which allows passage of blood cells through the lumen of the hollow fibres and allows the diffusion of the micro-vesicles to the exterior through the hollow fibre tubular membrane; in order to allow such a diffusion, the pores of the membrane of the hollow fibres are of a diameter sufficient to allow particles ranging from the size of 20 nm to 500 nm in diameter. In one embodiment, agents capable of binding the micro-vesicles, such as antibodies, proteins or aptamers are immobilised on the porous hollow fibre membrane or specifically on the porous exterior of the membrane.

In the cited reference there is no disclosure or suggestion of a filtering membrane which would be able to retain micro-vesicles by adsorption on its contact surface with the biological fluid.

The present invention is based on the finding that melt-blown filters, as commonly used for the depletion of leucocytes from blood, are also suitable for the removal of micro-vesicles from liquids and that such filters are capable of retaining micro-vesicles from liquids by adsorption in the same manner as leucocytes or platelets are retained.

Accordingly, a first subject of the present invention is a method for the removal of micro-vesicles by adsorption from a liquid and specifically from biological fluids, by passing the liquid through a filter made from one or more layers of a non-woven fibrous web.

Since the method of the invention is based on physical adsorption, it is not limited to specific micro-vesicles and it can be applied to micro-vesicles of different origin, including e.g. tumour-associated micro-vesicles and platelet-derived micro-vesicles.

The non-woven fibrous web that can be used in the method of the invention includes fibres having a surface of contact with the biological fluid made from or comprising polymeric materials which are conventionally used in filters for leucocyte or platelet depletion. They include polybutylene terephthalate, polyamides, polyurethanes (specifically polyurethane segmented with different numbers of hydrophilic PEO groups), alkoxy(meth)acrylates and copolymers thereof, alkyl acrylates, copolymers of alkoxy(meth)acrylates with alkyl acrylates, and vinyl pirrolydone-co-vinyl acetate.

The non-woven fibrous webs may have a CWST preferably in the range of from about 40 to about 80 dyn/cm.

In a preferred embodiment, the fibrous webs are based on a polymeric substrate, such as melt-blown fibres made from polybutylene terephthalate or a polyamide, having a coating constituting the contact surface with the biological fluid made from alkoxy(meth)acrylates or copolymers thereof, such as 2-methoxyethyacrylate or 2-ethoxyethylacrylate, or a polyurethane segmented with (-CH₂-CH₂-O)ₙ (polyethyleneoxide) groups wherein n is preferably ≤ 5.

The best efficiency in the removal of micro-vesicles, particularly from plasma or whole blood, has been obtained with the use of a filter made from one or more layers of a non-woven fibrous web, wherein the fibrous web is based on a polymeric substrate covered by a contact surface which is made from alkoxy(meth)acrylates or copolymers thereof, wherein alkoxy has preferably from 1 to 4 carbon atoms.

The above-mentioned filter constitutes a further subject of the invention as defined by the appended claims.

In said filter, the polymeric substrate is preferably made from polybutylene terephthalate (PBT) or a polyamide (PA).

Preferred features for the method of the invention and for the above-mentioned filter are independently one from the other or in combination:
a pore size in the range of from 0.5 to 8 µm;
an air permeability in the range of from 10 to 80 l/m²/s;
a density of from 0.10 to 0.40 g/cm²;
a fibre diameter of from 0.5 to 1.5 µm.

In a preferred embodiment of the invention, which has been found to have an optimum micro-vesicles removal efficiency, the non-woven fibrous web (or webs) comprised within the filter is a composite web or membrane obtained by a combination of web-microfibers, preferably melt-blown microfibers, made of PBT, coated with alkoxy(meth)acrylate or copolymers thereof, preferably 2-methoxyethylacrylate (pMEA) and/or nanofibres made from alkoxy(meth)acrylates or copolymers thereof, preferably pMEA.

The said nanofibres may be obtained and deposited on the microfibers by means of the electrostatic spinning or electro-spinning process known in the art.

Preferably, the nanofibres have a fibre diameter of from 0.1 to 0.5 µm and/or a specific weight of from 0.5 to 2.0 g/m².

The filter of the invention may be constructed according to the known filter design for filters for leucocytes or platelets depletion; it typically includes a housing with an inlet port which feeds the biological fluid to a filter element made by one or more layers of the non-woven fibrous web as hereinbefore defined and an outlet port; it may include additional filter elements either upstream or downstream of the micro-vesicles adsorbing web(s) specifically adapted for the removal of other components from the biological fluid, such as filter elements for the removal of gels, aggregates and the like.

The method of the invention for the adsorption of micro-vesicles can be applied either ex *vivo* or *in vivo*, such as in a continuous extracorporeal circuit from blood or plasma in a way similar to common adsorption aphaeresis therapy.

A specific application relates to the removal of tumour-associated micro-vesicles, as described in the above-mentioned WO2007/103572.

The method can also be applied as a step in a diagnostic method in order to separate the adsorbed micro-vesicles to be further analysed. Another application of the method is the separation and concentration of micro-vesicles from conditioned mediums of cells by adsorption followed by elution. Micro-vesicles separated in this way may be used for therapeutical applications, such as described in WO2009/057165.

A specific application of the method of the invention and of the filter and filter devices according to the invention relates to the removal of sepsis-associated micro-vesicles from patients' plasma or blood. Within the frame of the investigation relating to the present invention, the inventors have found that septic patients can be treated by the removal of micro-vesicles from their blood or plasma in a continuous extra-corporeal circuit. Accordingly, it is also disclosed by the present invention a method of treatment of sepsis by removal of sepsis-associated micro-vesicles from a patient's plasma or blood, particularly with the use of filter comprising one or more non-woven fibrous webs capable of retaining said micro-vesicles, by adsorption, preferably by means of a filter as defined in the appended claims.

Another specific application for the method of the invention is the use in the diagnosis of sepsis. The blood or plasma of a patient with sepsis or in danger of suffering from sepsis is treated ex vivo with a filter comprising one or more non-woven fibrous webs capable of retaining said micro-vesicles, by adsorption. Thereafter the filter is analysed for the amount of sepsis-associated microvesicles retained. Such analysis may be performed by treatment of the filter with a fluorescent dye binding specifically to sepsis-associated micro-vesicles followed by washing and measuring fluorescence.

The research group of the present inventors has recently shown that micro-vesicles derived from septic plasma are mainly produced by activated leucocytes and platelets and may exert a pro-apoptotic effect on tubular and glomerular epithelial cells (Cantaluppi V. et al., poster of oral presentation WCN2009, ISBB2009, CRRT Conference 2010). For many years, sepsis-targeted therapies have been focused on the elimination of pro- or antiinflammatory cytokines. A variety of ECCT have been developed for the removal of cytokines or bacterial-derived products, either specifically or unspecifically. To date, these attempts have not emerged with a strong clinical evidence for a benefit in sepsis patients. As the result of the present invention and of the hereto unknown possibility to remove sepsis-associated micro-vesicles by adsorption, it has been possible to show that the removal of sepsis-associated micro-vesicles is of benefit for the treatment of sepsis on patients in need thereof.

Also comprised within the scope of the invention is therefore a medical device establishing a continuous extracorporeal circuit comprising at least pump, a tubing system and a filter made from one or more layers of a non-woven fibrous web or specifically, a filter as defined according to any of the preferred embodiments described hereinbefore. The medical device typically includes an intake conduit into which the blood of the subject to be treated enters, a single or a plurality of filters comprising one or more layers of a non-woven fibrous web, capable of adsorbing micro-vesicles from blood and a system for reintroducing the blood into the subject, wherein the blood is reintroduced under physiologically acceptable conditions.

The method and filter according to the invention are further described in the following experimental section, which refers to preferred and non-limiting embodiments.

In the annexed drawings:
figure 1 is a histogram showing the average fluorescence intensity of three different membranes for micro-vesicle adsorption after incubation with plasma micro-vesicles (MV); data are expressed as averages ± SD of five different fields for each membrane;
figure 2 shows representative confocal microscopy micrographs (A, B, C) showing red-labelled plasma MV inside the fibres of three MV adsorbing membranes A, B and C tested in the following experimental section (magnification x400). Red fluorescent particles are visible on the outer layer of the membrane;
figure 3 is a histogram showing the percent decrease of fluorescence intensity as determined by FACS analysis on samples collected downstream of membranes A, B and C with respect to samples collected upstream of the membranes; and
figure 4 is a histogram showing the mean fluorescence intensity in composite membranes D, F and G tested in the experimental section.

### Experimental tests

The aim of the following tests is the evaluation of plasma MV adsorption to different non-woven fibrous webs (in the following membranes) after labelling with a fluorescent dye in static and dynamic flow conditions.

### General procedure

The tests were carried out according to the following procedural outline.

The autofluorescence of each tested membrane was first evaluated by fluorescence microscopy after seeding the membranes into a 6-well culture plate.

MV were isolated from plasma of healthy donors by ultracentrifugation (100000 rpm, 1 hr, 4°C) and collected in a single pool for *in vitro* experiments (starting volume of plasma used: 500 ml).

Plasma MV were characterized by FACS and labelled with the red fluorescent dye PKH26 following manufacturer's instructions (Sigma, St. Louis, MO). Red-labelled MV were newly ultracentrifuged with the same conditions reported above in order to wash out excessive dye.

For the evaluation of MV adsorption to membranes in static conditions, the MV pellet was diluted with 2.5 ml of 0.9% saline and added (0.5 ml/each) for 2 h at 37°C to the membranes contained in the 6-well culture plate and previously washed twice with 0.9% saline. As control, membranes were incubated with the same amount of PKH26 subjected to ultracentrifugation without plasma MV.

For the evaluation of MV adsorption to membranes in dynamic conditions, the MV pellet was diluted with 30 ml of 0.9% saline and added membranes (10 ml for each membrane) at a speed of 8 ml/min. MV dynamic adhesion test was performed using a defined pore size , permeability and density range of a composite membrane set based on previous static adhesion experiments.

In both static and dynamic conditions, MV adhesion was evaluated by fluorescence and confocal microscopy followed by software quantification of average fluorescence intensity for each microscopic field observed. Data were expressed as averages ± SD of 5 different fields for each membrane. Moreover, for the dynamic conditions samples of saline containing MV was collected before and after the membranes and subjected to FACS analysis to evaluate MV size and morphology. Microbeads of different sizes (1-2-4 µm) were used as controls to detect MV diluted in 0.9% saline. The dynamic test have been repeated after suspension of MV in plasma, the adhesion was again evaluated by fluorescence and confocal microscopy followed by software quantification of average fluorescence intensity for each microscopic field observed.

### Results

After preliminary tests, a group of three membrane was selected for testing their efficiency in micro-vesicle adsorption.

The following membranes were selected.

| Membrane identification (static test) | Chemical composition | Fiber diameter (µm) | Pore size (µm) |
|---|---|---|---|
| 1 | Polybutylene terephtalate coated by segmented polyurethane | 0.5-1.0 | 6-8 |
| **2** | **Polybutylene terephtalate fiber coated by 2-Methoxyethyl Acrylate** | **0.5-1.0** | **6-8** |
| 3 | Polybutylene terephtalate coated by poly(1-vinylpyrrolidone-co-vinyl acetate) (1:7 w/w) | 0.5-1.0 | 6-8 |

None of the selected membranes did show autofluorescence in red light and only a slight autofluorescence in blue and green light. The evaluation in blue and green light allowed to identify the structure of the membranes with a micrograph quite similar to those observed in light microscopy.

In view of the lack of autofluorescence in red light, the red fluorescent dye PKH26 was specifically selected to label plasma MV in order to identify MV adhered to the membranes.

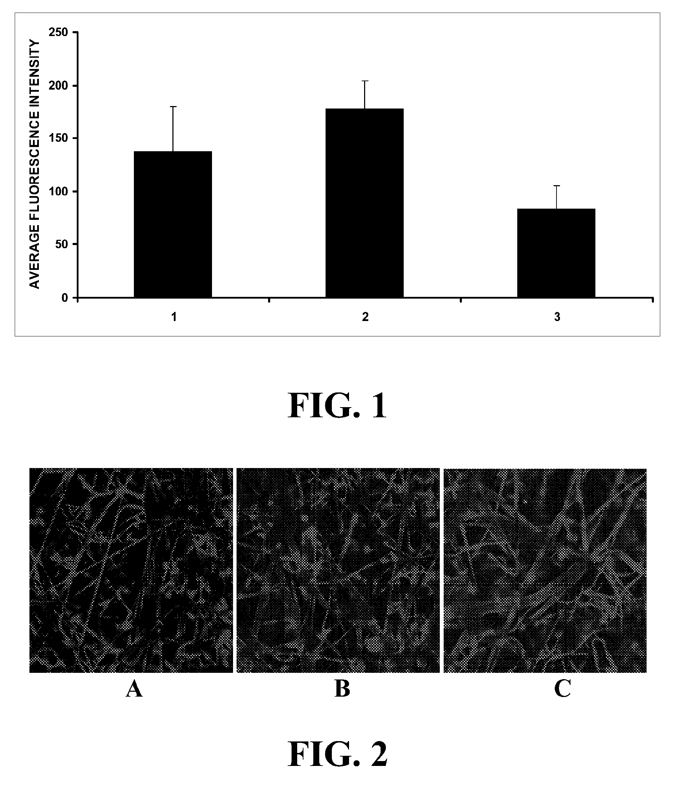

After incubation in static conditions at 37°C for 2 h, red-labelled plasma MV were detected on all membranes. As experimental control, membranes were incubated with the same amount of ultracentrifuged PKH26 in the absence of MV. The analysis of fluorescence intensity on the membranes revealed that membrane #2 had the maximal level of intensity followed by membrane # 1 and 3 respectively (Fig. 1).

On this basis a new set of experiments was performed in dynamic flow using membrane # 2 in order to identify the optimal porosity range for MV removal. The membrane pore size has been modified from 6-8 µ to 1-1.5 µ keeping the same surface contact area (fiber diameter was the same in all the experiments).

| Membrane identification (dynamic test) | Chemical composition | Fiber diameter (µm) | Pore size (µm) | Air permeability (1/m²/s) | Density (g/cm³) |
|---|---|---|---|---|---|
| A | Polybutylene terephtalate fiber coated by 2-Methoxyethyl Acrylate | 0.5-1.0 | 6-8 | 69 | 0.28 |
| B | Polybutylene terephtalate fiber coated by 2-Methoxyethyl Acrylate | 0.5-1.0 | 2-4 | 35 | 0.32 |
| **C** | **Polybutylene terephtalate fiber coated by 2-Methoxyethyl Acrylate** | **0.5-1.0** | **1-1.5** | **16** | **0.30** |

Confocal microscopy evaluation showed the presence of red light fluorescence in all membranes tested. Moreover, the greater fluorescence intensity was observed in the composite membrane at 1-1.5 µm porosity in respect to 2-4 and 6-8 µm (Fig. 2). In particular, at high magnification, red fluorescent particles were visible on the outer layer of the membrane (Fig. 2).

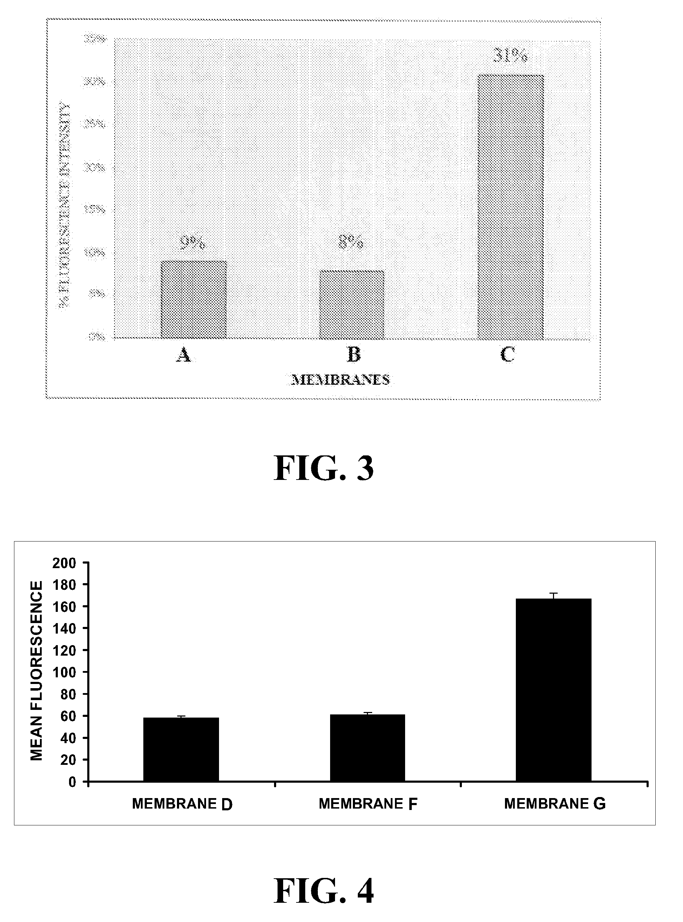

FACS analysis on samples collected before and after the membranes confirmed the adhesion of MV to the membranes. Indeed, all samples collected after the membranes showed a decrease of fluorescence intensity at FACS (Fig. 3). The greater decrease of fluorescence intensity was detected using membrane C at 1-1.5 µm (decrease respectively of 9% for membrane A, 8% for membrane B and 31% for membrane C) (Fig. 3).

Based on that test result, it was decided to increase surface contact area by coating the membrane C (necessary as it has also support function) with nanofibers made of the same coating polymer (2-Methoxyethyl Acrylate). The nanofibers were produced by electro-spinning process.

The nanofibers makes also stable the pore size of the composition (<1µm) as the fibers are linked in the crossing points

| Membrane identification (dynamic test) | Chemical composition | Support membrane | Nanofiber diameter (µm) | Nanofiber weight (g/sqm) |
|---|---|---|---|---|
| D | Polybutylene terephtalate fiber coated by 2-Methoxyethyl Acrylate combined with 2-Methoxyethyl Acrylate nanofiber (pMEA) | Same as C | N.A | 0 |
| F | same | Same as C | 0.3 | 0.30 |
| **G** | **same** | **Same as C** | **0.3** | **1.10** |

Removal MV test was done according the dynamic procedure with the only exception that saline was replaced with plasma.

The confocal microscopy evaluation showed the presence of red light fluorescence in all membranes tested but the greatest fluorescence intensity was observed in the composite membrane G in comparison with membrane F and D (which is our reference from previous experiments).

Test results confirmed the optimal removal efficiency of composite membrane G which was obtained by a combination of web microfiber (made of PBT coated with pMEA) and nanofiber (made of pMEA).

## Claims

1. A filter for the removal of micro-vesicles from biological fluids comprising one or more layers of a non-woven fibrous web, wherein the fibrous web is based on a polymeric substrate having a surface coating for contact with the biological fluid made from alkoxy(meth)acrylates or copolymers thereof.

2. A filter according to claim 1, wherein said polymeric substrate is made from polybutylenterephthalate or a polyamide.

3. A filter according to claim 1 or 2, wherein said surface coating is made from 2-methoxyethyl acrylate or a copolymer of 2-methoxyethyl acrylate with methyl acrylate.

4. A filter according to any of claims 1 to 3, wherein said fibrous web has a pore size of from 0.5 to 8 µm.

5. A filter according to any of claims 1 to 4, wherein said fibrous web is made from fibres having a diameter of from 0.5 to 1.5 µm.

6. A filter according to any of claims 1 to 5, wherein the fibrous web has an air permeability from 10 to 80 l/m²/s.

7. A filter according to any of claims 1 to 6, wherein said fibrous web has a density from 0.10 to 0.40 g/cm³.

8. A filter according to any of claims 1 to 7, wherein said fibrous web is made from melt-blown fibres.

9. A filter according to any of claims 1 to 8, wherein said fibrous web further comprises as an additional surface for contact with the biological fluid nanofibres made from 2-methoxyethyl acrylate or copolymers thereof with methyl acrylate deposited by electro-spinning on said coated polymeric substrate.

10. A filter according to claim 9, wherein said nanofibres have a diameter from 0,1 to 0.5 µm and/or a specific weight of from 0.5 to 2.0 g/m².

11. A method for the adsorption of micro-vesicles from a liquid, thereby to remove said micro-vesicles from the liquid, comprising passing the liquid through a filter made from one or more layers of a non-woven fibrous web.

12. A method according to claim 11, wherein said filter is a filter according to any of claims 1 to 10.

13. A method according to claims 11 or 12, wherein the liquid is a plasma or whole blood from a patient suffering or in danger of suffering from sepsis.

14. A method according to any of claims 11 to 13, wherein the micro-vesicles are sepsis-associated micro-vesicles or tumour-associated micro-vesicles.

15. A medical device comprising means for establishing a continuous extra-corporal circuit comprising at least a pump, a tubing system and a filter according to any of claims 1 to 10.
